# EUROPEAN PATENT APPLICATION

(11) **EP 4 712 167 A1**
(43) Date of publication of application: **18.03.2026**
(21) Application number: 24817826.1
(22) Date of filing: 08.11.2024
(51) Int. Cl.: H01M 4/525, H01M 4/505, H01M 4/131, H01M 10/0525, C01G 53/00

(54) **HIGH-ENTROPY DOPED POSITIVE ELECTRODE MATERIAL, AND PREPARATION METHOD THEREFOR AND USE THEREOF**

(30) Priority: 23.07.2024 CN 202410987708
(71) Applicant: Tianjin B&M Science And Technology Co., Ltd., Tianjin 300384 (CN)
(72) Inventor: CHEN, Penghui, Tianjin 300384 (CN); JI, Changyin, Tianjin 300384 (CN); LV, Fei, Tianjin 300384 (CN); XU, Ning, Tianjin 300384 (CN)
(74) Representative: Ström & Gulliksson AB
(86) International application number: PCT/CN2024/130829
(87) International publication number: WO 2026/020641

(57) **Abstract**

The present application relates to a high entropy doped positive electrode material and production method and use thereof. The high entropy doped positive electrode material of the present application comprises a material represented by a chemical formula of LiNiₓCo_{y}Mn_{z}BₐM_{b}O₂, wherein 0.80≤x<0.98, 0<y<0.2, 0<z<0.2, a>0, b>0, a≥b, x+y+z+a+b=1, and M comprises at least four of Al, Zr, Sr, Sn, Sb, Si, Ba, Y, W, Ta, Ti, Mo, Nb, La, Ta and Ce. The high entropy doped positive electrode material of the present application can have both high specific capacity and cycle stability.

## Description

### CROSS REFERENCE TO RELATED APPLICATIONS

This application claims the priority of Chinese Patent Application No. 202410987708.4, filed with the China National Intellectual Property Administration on July 23, 2024, and titled with "HIGH ENTROPY DOPED POSITIVE ELECTRODE MATERIAL AND PRODUCTION METHOD AND USE THEREOF", which is hereby incorporated by reference in its entirety.

### FIELD

The present application relates to the technical field of lithium-ion batteries, and in particular to a high-entropy doped positive electrode material and a production method and use thereof.

### BACKGROUND

High-nickel ternary positive electrode materials have become one of the research hotspots of positive electrode materials for lithium-ion batteries due to their advantages such as low cost and high energy density. In high-nickel ternary positive electrode materials, with the increase of Ni content, failure modes such as chemical performance decay, oxygen escape and new phases of rock salt will be aggravated, which will lead to poor cycle stability of positive electrode materials. At present, the crystal structure stability and surface structure stability of high-nickel positive electrode materials is mainly improved by doping the high-nickel positive electrode materials. However, while traditional doping methods improve the cycle stability of high-nickel positive electrode materials, they will also lead to a decrease in the specific capacity of the high-nickel positive electrode materials. That is, it is difficult for traditional doped positive electrode materials to have high cycle stability and specific capacity at the same time.

### SUMMARY

Based on this, it is necessary to provide a high entropy doped positive electrode material and a production method and use thereof. The high entropy doped positive electrode material of the present application can have both high specific capacity and cycle stability.

In the first aspect, the present application provides a high entropy doped positive electrode material, comprising a material represented by a chemical formula of LiNiₓCo_{y}Mn_{z}BₐM_{b}O₂, wherein 0.80≤x<0.98, 0<y<0.2, 0<z<0.2, a>0, b>0, a≥b, x+y+z+a+b=1, and M comprises at least four of Al, Zr, Sr, Sn, Sb, Si, Ba, Y, W, Ta, Ti, Mo, Nb, La, Ta and Ce.

In some embodiments, 0.90≤x<0.98.

In some embodiments, 0.01≤a≤0.05.

In some embodiments, 0.01≤b≤0.05.

In some embodiments, 0.01≤y≤0.05.

In some embodiments, 0.01≤z≤0.05.

In some embodiments, a secondary particle of the high entropy doped positive electrode material has a Dv50 of 2µm to 5µm.

In some embodiments, a specific surface area of the high entropy doped positive electrode material is 0.5m²/g to 1.5m²/g.

In the second aspect, the present application provides a method for producing a high entropy doped positive electrode material, comprising the following steps:
mixing a doping source, a boron source, a lithium source, and a nickel-cobalt-manganese precursor to obtain a mixed raw material; and
sintering the mixed raw material;
wherein, the doping source comprises at least four of Al, Zr, Sr, Sn, Sb, Si, Ba, Y, W, Ta, Ti, Mo, Nb, La, Ta and Ce;
the nickel-cobalt-manganese precursor comprises a material represented by a chemical formula of NiₘCoₙMn₁₋ₘ₋ₙ(OH)₂, wherein 0.80≤m<0.98, n>0, m+n<1.

In some embodiments, a molar ratio of a lithium element in the lithium source to the nickel-cobalt-manganese precursor is (1.01-1.06) :1.

In some embodiments, a molar percentage of a boron element in the boron source to the mixed raw material is 1%-5%.

In some embodiments, a molar percentage of an M element in the doping source to the mixed raw material is 0.5%-5%.

In some embodiments, the boron source comprises at least one of H₃BO₃ and B₂O₃.

In some embodiments, the doping source comprises at least one of oxide, carbonate, hydroxide and acetate of M.

In some embodiments, the lithium source comprises at least one of lithium hydroxide, lithium carbonate, lithium acetate, lithium nitrate and lithium oxalate.

In some embodiments, the sintering the mixed raw material comprises the following steps:
pre-sintering the mixed raw material in an oxygen-containing gas atmosphere;
after heating, subjecting the mixed raw material to a first sintering to obtain a sintered material; and
in an oxygen-containing gas atmosphere, mixing the sintered material and cobalt hydroxide to obtain a mixture, and subjecting the mixture to a second sintering.

In some embodiments, the pre-sintering is performed at a temperature of 450°C to 650°C.

In some embodiments, the pre-sintering is performed for 2h to 10h.

In some embodiments, the first sintering is performed at a temperature of 700°C to 900°C.

In some embodiments, the first sintering is performed for 10h to 20h.

In some embodiments, the second sintering is performed at a temperature of 580°C to 680°C.

In some embodiments, the second sintering is performed for 2h to 10h.

In some embodiments, a volume percentage of oxygen in the oxygen-containing gas is above 97%.

In the third aspect, the present application provides a positive electrode sheet, comprising: a current collector and an active layer located on the surface of the current collector, wherein the active layer comprises any of the high entropy doped positive electrode materials described above or a high entropy doped positive electrode material produced by any of the methods for producing high entropy doped positive electrode materials described above.

In the fourth aspect, the present application provides a secondary battery, comprising the above-mentioned positive electrode sheet.

In the fifth aspect, the present application provides an electrical device, comprising the above-mentioned secondary battery.

In the above-mentioned high entropy doped positive electrode material, the high nickel positive electrode material is doped by B element and at least four doping elements of Al, Zr, Sr, Sn, Sb, Si, Ba, Y, W, Ta, Ti, Mo, Nb, La, Ta and Ce. In the doping process, the B element is dominant, and the B element can be adsorbed on the (003) crystal plane, reducing the surface energy of the (003) crystal plane and increasing the surface energy of the (104) crystal plane. Therefore, the high entropy doped positive electrode material will be more inclined to grow along the (003) crystal plane, thereby refining and uniforming the primary particle size, and thus significantly alleviating stress unevenness, improving crack resistance and improving mechanical stability. Furthermore, by doping with more than five elements, the high entropy characteristics can produce a positive synergistic effect between the doping elements to improve the electrochemical performance of the positive electrode material. In addition, the diversity of doping elements will lead to short-range interruption of the crystal structure of the positive electrode material, which can not only improve the tolerance of the positive electrode material to structural evolution in the electrochemical process, but also induce defects that are conducive to the migration of electrons and ions, thereby increasing the specific capacity of the high-entropy doped positive electrode material. The high-entropy doped positive electrode material of the present application can have both high specific capacity and cycle stability.

### BRIEF DESCRIPTION OF DRAWINGS

Figure 1 is a scanning electron microscope image of the high entropy doped positive electrode material provided in Example 1 of the present application;
Figure 2 is a scanning electron microscope image of the high entropy positive electrode material provided in Comparative Example 1 of the present application;
Figure 3 is a comparison chart of the cycle retention rates of Example 1 and Comparative Example 1 of the present application.

### DETAILED DESCRIPTION

In order to make the above-mentioned purposes, features and advantages of the present application more obvious and understandable, the specific embodiments of the present application are described in detail below. In the following description, many specific details are set forth to facilitate a full understanding of the present application. However, the present application can be implemented in many other ways different from those described herein, and those skilled in the art can make similar modifications without violating the connotation of the present application. Therefore, the present application is not limited to the specific examples disclosed below.

Unless otherwise defined, all technical and scientific terms used herein have the same meaning as those commonly understood by those skilled in the art of the present application. The terms used in the specification of the present application are only for the purpose of describing specific examples and are not intended to limit the present application. The term "and/or" used herein includes any and all combinations of one or more related listed items.

In addition, the terms "first" and "second" are used only for descriptive purposes and cannot be understood as indicating or implying relative importance or implicitly indicating the number of technical features indicated. Therefore, the features defined as "first" and "second" may explicitly or implicitly include at least one of the features. In the description of the present application, the meaning of "multiple" is at least two, such as two, three, etc., unless otherwise clearly and specifically defined.

An example of the present application provides a high entropy doped positive electrode material, comprising a material represented by a chemical formula of LiNiₓCo_{y}Mn_{z}BₐM_{b}O₂, wherein 0.80≤x<0.98, 0<y<0.2, 0<z<0.2, a>0, b>0, a≥b, x+y+z+a+b=1, and M comprises at least four of Al, Zr, Sr, Sn, Sb, Si, Ba, Y, W, Ta, Ti, Mo, Nb, La, Ta, and Ce.

In some embodiments, a molar number of each element in M is the same.

In some embodiments, M comprises any four of Al, Zr, Sr, Sn, Sb, Si, Ba, Y, W, Ta, Ti, Mo, Nb, La, Ta, and Ce; a molar ratio of any four of Al, Zr, Sr, Sn, Sb, Si, Ba, Y, W, Ta, Ti, Mo, Nb, La, Ta, and Ce is 1:1:1:1.

In some embodiments, M comprises any five of Al, Zr, Sr, Sn, Sb, Si, Ba, Y, W, Ta, Ti, Mo, Nb, La, Ta and Ce; a molar ratio of any five of Al, Zr, Sr, Sn, Sb, Si, Ba, Y, W, Ta, Ti, Mo, Nb, La, Ta and Ce is 1:1:1:1:1.

In the above high entropy doped positive electrode material, the positive electrode material is doped by B element and at least four doping elements of Al, Zr, Sr, Sn, Sb, Si, Ba, Y, W, Ta, Ti, Mo, Nb, La, Ta and Ce. In the doping process, B element is dominant, and B element can be adsorbed on the (003) crystal plane, reducing the surface energy of the (003) crystal plane and increasing the surface energy of the (104) crystal plane. Therefore, the high entropy doped positive electrode material will tend to grow along the (003) crystal plane, thereby refining and uniformizing the primary particle size, and thus significantly alleviating stress unevenness, improving crack resistance and improving mechanical stability. Furthermore, by doping with more than five elements, the high entropy characteristics can produce a positive synergistic effect between the doping elements to improve the electrochemical performance of the positive electrode material. In addition, the diversity of doping elements will lead to short-range interruption of the crystal structure of the positive electrode material, which can not only improve the tolerance of the positive electrode material to structural evolution in the electrochemical process, but also induce defects that are conducive to the migration of electrons and ions, thereby increasing the specific capacity of the high-entropy doped positive electrode material. The high-entropy doped positive electrode material of the present application can have both high specific capacity and cycle stability.

In some embodiments, 0.90≤x<0.98. Optionally, x is 0.9, 0.91, 0.92, 0.93, 0.94, 0.95, 0.96, 0.97, 0.975, 0.979, 0.9799 or 0.97999. Alternatively, x may also be within the range between any two of the above values.

In some embodiments, 0.01≤a≤0.05.

In some embodiments, 0.01≤b≤0.05.

When the values of a and b are too small, that is, when the doping amount is too low, the entropy value of the positive electrode material will be too low, and the specific capacity and cycle stability of the positive electrode material will be low. When the values of a and b are too large, the doping amount is too high. Due to the poor electrochemical activity of the doping element M, the high doping amount leads to a low specific capacity of the positive electrode material.

Optionally, a is 0.01, 0.015, 0.02, 0.025, 0.03, 0.035, 0.04, 0.045 or 0.05. Alternatively, a may also be within the range between any two of the above values.

Optionally, b is 0.01, 0.015, 0.02, 0.025, 0.03, 0.035, 0.04, 0.045 or 0.05. Alternatively, b may also be within the range between any two of the above values.

In some embodiments, 0.01≤y≤0.05. Optionally, y is 0.01, 0.015, 0.02, 0.025, 0.03, 0.035, 0.04, 0.045 or 0.05. Alternatively, y may also be within the range between any two of the above values.

In some embodiments, 0.01≤z≤0.05. Optionally, z is 0.01, 0.015, 0.02, 0.025, 0.03, 0.035, 0.04, 0.045 or 0.05. Alternatively, z may also be within the range between any two of the above values.

In some embodiments, the high entropy doped positive electrode material is a polycrystalline high entropy doped positive electrode material.

In some embodiments, the high entropy doped positive electrode material comprises a plurality of secondary particles, and the secondary particles are agglomerated by primary particles.

In some embodiments, a Dv50 of the secondary particle of the high entropy doped positive electrode material is 2µm to 5µm. The high entropy doped positive electrode material with the secondary particle having a Dv50 within the above range can be conveniently compounded with large particles of positive electrode active materials for use.

Optionally, the Dv50 of the secondary particle of the high entropy doped positive electrode material is 2µm, 2.2µm, 2.4µm, 2.6µm, 2.8µm, 3µm, 3.2µm, 3.4µm, 3.6µm, 3.8µm, 4µm, 4.2µm, 4.4µm, 4.6µm, 4.8µm or 5µm. Alternatively, the Dv50 of the secondary particle of the high entropy doped positive electrode material can also be within the range between any two of the above values.

In some embodiments, a specific surface area of the high entropy doped positive electrode material is 0.5m²/g to 1.5m²/g.

Optionally, the specific surface area of the high entropy doped positive electrode material is 0.5m²/g, 0.6m²/g, 0.7m²/g, 0.8m²/g, 0.9m²/g, 1m²/g, 1.1m²/g, 1.2m²/g, 1.3m²/g, 1.4m²/g or 1.5m²/g. Alternatively, the specific surface area of the high entropy doped positive electrode material may also be within the range between any two of the above specific surface areas.

Another embodiment of the present application provides a method for producing a high entropy doped positive electrode material, comprising the following steps:
mixing a doping source, a boron source, a lithium source, and a nickel-cobalt-manganese precursor to obtain a mixed raw material; and
sintering the mixed raw material;
wherein, the doping source comprises at least four of Al, Zr, Sr, Sn, Sb, Si, Ba, Y, W, Ta, Ti, Mo, Nb, La, Ta and Ce;
the nickel-cobalt-manganese precursor comprises a material represented by a chemical formula of NiₘCoₙMn₁₋ₘ₋ₙ(OH)₂, wherein 0.80≤m<0.98, n>0, m+n<1.

Optionally, 0.90≤m<0.98. Further optionally, m is 0.9, 0.91, 0.92, 0.93, 0.94, 0.95, 0.96, 0.97, 0.975, 0.979, 0.9799 or 0.97999. Alternatively, m may also be within the range between any two of the above values.

Optionally, 0.01≤n≤0.05. Further optionally, n is 0.01, 0.015, 0.02, 0.025, 0.03, 0.035, 0.04, 0.045 or 0.05. Alternatively, n may also be within the range between any two of the above values.

In some embodiments, a molar ratio of the lithium element in the lithium source to the nickel-cobalt-manganese precursor is (1.01 to 1.06):1.

Optionally, the molar ratio of the lithium element in the lithium source to the nickel-cobalt-manganese precursor is 1.01:1, 1.02:1, 1.03:1, 1.04:1, 1.05:1 or 1.06:1. Alternatively, the molar ratio of the lithium element in the lithium source to the nickel-cobalt-manganese precursor may also be within the range between any two of the above molar ratios.

In some embodiments, a molar percentage of the boron element in the boron source to the mixed raw material is 1% to 5%.

Optionally, the molar percentage of boron in the boron source to the mixed raw material is 1%, 1.5%, 2%, 2.5%, 3%, 3.5%, 4%, 4.5% or 5%. Alternatively, the molar percentage of boron in the boron source to the mixed raw material may also be within the range between any two of the above percentages.

In some embodiments, a molar percentage of M in the doping source to the mixed raw material is 0.5% to 5%.

Optionally, the molar percentage of M in the doping source to the mixed raw material is 0.5%, 1%, 1.5%, 2%, 2.5%, 3%, 3.5%, 4%, 4.5% or 5%. Alternatively, the molar percentage of M in the doping source to the mixed raw material may also be within the range between any two of the above percentages.

In some embodiments, the doping source comprises at least one of an oxide, carbonate, hydroxide and acetate of M.

In some embodiments, the lithium source comprises at least one of lithium hydroxide, lithium carbonate, lithium acetate, lithium nitrate and lithium oxalate.

In some embodiments, the sintering the mixed raw material comprises the following steps:
pre-sintering the mixed raw material in an oxygen-containing gas atmosphere;
after heating, subjecting the mixed raw material to a first sintering to obtain a sintered material; and
in an oxygen-containing gas atmosphere, mixing the sintered material and cobalt hydroxide to obtain a mixture, and subjecting the mixture to a second sintering.

In the sintered material, there will be residual alkali, which has not been completely reacted, on the surface of the material, and the residual alkali will hinder the release of lithium, resulting in poor performance of the positive electrode material. Lithium cobalt oxide can be formed by the reaction of cobalt hydroxide and the residual alkali on the surface of the material. Lithium cobalt oxide has electrochemical activity and good conductivity, which can make the prepared positive electrode material have low impedance, high specific capacity and cycle stability.

In some embodiments, the pre-sintering is performed at a temperature of 450°C to 650°C.

Within the above pre-sintering temperature range, the mixing effect of the nickel-cobalt-manganese precursor and the lithium source is good. When the pre-sintering temperature is too low, the lithium source is difficult to melt, and the reaction between the lithium source and the nickel-cobalt-manganese precursor is insufficient. When the pre-sintering temperature is too high, the lithium-nickel exchange will be aggravated. Optionally, the pre-sintering is performed at a temperature of 450°C, 460°C, 470°C, 480°C, 490°C, 500°C, 510°C, 520°C, 530°C, 540°C, 550°C, 560°C, 570°C, 580°C, 590°C, 600°C, 610°C, 620°C, 630°C, 640°C or 650°C. Alternatively, the pre-sintering temperature may also be within the range between any two of the above temperatures.

In some embodiments, the pre-sintering is performed at a heating rate of 1 to 5°C/min. Optionally, the pre-sintering is performed at a heating rate of 1°C/min, 1.5°C/min, 2°C/min, 2.5°C/min, 3°C/min, 3.5°C/min, 4°C/min, 4.5°C/min or 5°C/min. Alternatively, the pre-sintering heating rate may also be within the range between any two of the above heating rates.

In some embodiments, the pre-sintering is performed for 2h to 10h.

Optionally, the pre-sintering is performed for 2h, 3h, 4h, 5h, 6h, 7h, 8h, 9h or 10h. Alternatively, the pre-sintering duration may also be within the range between any two of the above durations.

In some embodiments, the first sintering is performed at a temperature of 700°C to 900°C.

In the temperature range of the first sintering, the grain growth effect of the positive electrode material is good. When the temperature of the first sintering is too low, the crystallinity degree of the positive electrode material is insufficient, the grains of the primary particles are too small, and the side reactions are aggravated, further leading to irregular morphology of the positive electrode material. When the temperature of the first sintering is too high, the secondary particles of the positive electrode material will grow excessively, and a single crystal positive electrode material will be formed. Optionally, the temperature of the first sintering is 700°C, 750°C, 800°C, 850°C or 900°C. Alternatively, the temperature of the first sintering may also be within the range between any two of the above temperatures.

In some embodiments, the first sintering is performed at a heating rate of 1 to 5°C /min. Optionally, the first sintering is performed at a heating rate of 1°C/min, 1.5°C/min, 2°C/min, 2.5°C/min, 3°C/min, 3.5°C/min, 4°C/min, 4.5°C/min or 5°C/min. Alternatively, the heating rate of the first sintering may also be within the range between any two of the above heating rates.

In some embodiments, the first sintering is performed for 10h to 20h.

Optionally, the first sintering is performed for 10h, 11h, 12h, 13h, 14h, 15h, 16h, 17h, 18h, 19h or 20h. Alternatively, the duration of the first sintering may also be within the range between any two of the above durations.

In some embodiments, a molar ratio of the sintered material to cobalt hydroxide is 1: (0.005 to 0.02). Optionally, the molar ratio of the sintered material to cobalt hydroxide is 1:0.005, 1:0.008, 1:0.01, 1:0.015 or 0.02.

In some embodiments, the second sintering is performed at a temperature of 580°C to 680°C.

In the range of the second sintering temperature, the reaction effect of cobalt hydroxide and the residual alkali on the surface of the sintered material is good. When the temperature of the second sintering is too low, the reaction of cobalt hydroxide and the residual alkali is insufficient. When the temperature of the second sintering is too high, the diffusion rate of the cobalt element will be too fast, which may cause the cobalt element to penetrate into the lattice of the sintered material, resulting in an unstable lattice structure of the positive electrode material. Within the range of the second sintering temperature, cobalt hydroxide can be controlled to react only with the residual alkali on the surface of the sintered material. Optionally, the temperature of the second sintering is 580°C, 600°C, 620°C, 640°C, 660°C or 680°C. Alternatively, the temperature of the second sintering can also be in the range between any two of the above temperatures.

In some embodiments, the second sintering is performed for 2h to 10h.

Optionally, the second sintering is performed for 2h, 3h, 4h, 5h, 6h, 7h, 8h, 9h or 10h. Alternatively, the duration of the second sintering may also be within the range between any two of the above durations.

In some embodiments, a volume percentage of oxygen in the oxygen-containing gas is above 97%.

Optionally, the volume percentage of oxygen in the oxygen-containing gas is 97% to 100%. Further optionally, the volume percentage of oxygen in the oxygen-containing gas is 97%, 97.5%, 98%, 98.5%, 99%, 99.5% or 100%. Alternatively, the volume percentage of oxygen in the oxygen-containing gas may also be within the range between any two of the above percentages.

Another embodiment of the present application provides a positive electrode plate, comprising: a current collector and an active layer located on the surface of the current collector, the active layer comprising any of the high entropy doped positive electrode materials described above or a high entropy doped positive electrode material prepared by any of the methods for producing high entropy doped positive electrode materials described above.

Another embodiment of the present application provides a secondary battery, comprising the above positive electrode plate.

Another embodiment of the present application provides an electrical device, comprising the above secondary battery.

The technical solution of the present invention is detailed below in conjunction with specific examples. It should be understood that these examples are only used to illustrate the present invention and are not used to limit the scope of the present invention. For experimental methods in the following examples that do not specify specific conditions, please refer to the instructions given in the present invention first, and also refer to the experimental manual or conventional conditions in the art, or the conditions recommended by the manufacturer, or refer to experimental methods known in the art.

In the following specific embodiments, the measurement parameters of the raw material components may have slight deviations within the weighing accuracy range unless otherwise specified. For temperature and time parameters, acceptable deviations caused by instrument test accuracy or operation accuracy are allowed.

### Example 1

In this example, the boron source was H₃BO₃, the doping source was ZrO₂, SrCO₃, Al₂O₃ and Nb₂O₅, the lithium source was LiOH•H₂O, the nickel-cobalt-manganese precursor was Ni_{0.96}CO_{0.03}Mn_{0.01}(OH)₂, and the Dv50 of the nickel-cobalt-manganese precursor was 2µm to 3µm. The Dv50 of the prepared high entropy doped positive electrode material was 2µm to 3µm, and the specific surface area was 1.016m²/g.

Production method of high entropy doped positive electrode material:
(1) Ni_{0.96}Co_{0.03}Mn_{0.01}(OH)₂, LiOH•H₂O, H₃BO₃, ZrO₂, SrCO₃, Al₂O₃ and Nb₂O₅ were weighed in a molar ratio of 1:1.04:0.04:0.01:0.01:0.005:0.005, and the above-mentioned compounds were mixed in an air flow mixer. The speed of the air flow mixer was 1200rpm/min, and the mixing was performed for 40min. After sufficient mixing, a mixed raw material was obtained.
(2) The mixed raw material was transferred to a box furnace for high-temperature sintering in an oxygen atmosphere. First, the mixed raw material was heated to 630°C at a heating rate of 2.5°C/min and sintered for 6 hours, and then the mixed raw material was heated to 720°C at a heating rate of 2.5°C/min and sintered for 16 hours. The oxygen content in the sintering atmosphere was 99 vol%. After cooling in the furnace, the obtained material was successively subjected to jaw crushing, roller crushing, air flow crushing and sieving through 325 mesh to obtain a sintered material.
(3) The sintered material obtained in step (2) and cobalt hydroxide were mixed uniformly at a molar ratio of 1:0.01, sintered at 660°C for 6 hours in a box furnace with a 99 vol% O₂ atmosphere, cooled, and sieved through 325 mesh to obtain a high entropy doped positive electrode material.

### Example 2

In this example, the boron source was B₂O₃, the doping source was ZrO₂, Sb₂O₃, WO₃, Nb₂O₅ and Al₂O₃, the lithium source was LiOH•H₂O, the nickel-cobalt-manganese precursor was Ni_{0.96}Co_{0.03}Mn_{0.01}(OH)₂, and the Dv50 of the nickel-cobalt-manganese precursor was 2µm to 3µm. The Dv50 of the prepared high-entropy doped positive electrode material was 2µm to 3µm, and the specific surface area was 1.005m²/g.

Production method of high entropy doped positive electrode material:
(1) Ni_{0.93}Co_{0.05}Mn_{0.02}(OH)₂, LiOH•H₂O, B₂O₃, ZrO₂, Sb₂O₃, WO₃, Nb₂O₅ and Al₂O₃ were weighed in a molar ratio of 1:1.04:0.05:0.01:0.005:0.01:0.005:0.005, and the above compounds were mixed in an air flow mixer. The speed of the air flow mixer was 1200rpm/min, and the mixing time was performed for 40min. After sufficient mixing, a mixed raw material was obtained.
(2) The mixed raw material was transferred to an atmosphere furnace for high-temperature sintering in a sintering atmosphere. First, the mixed raw material was heated to 630°C at a heating rate of 2.5°C/min and sintered for 6 hours, and then the mixed raw material was heated to 725°C at a heating rate of 2.5°C/min and sintered for 16 hours. The oxygen content in the sintering atmosphere was 99 vol%. After cooling in the furnace, the obtained material was successively subjected to jaw crushing, roller crushing, air flow crushing and sieving through 325 mesh to obtain a sintered material.
(3) The sintered material obtained in step (2) and cobalt hydroxide were mixed uniformly at a molar ratio of 1:0.01, sintered at 660°C for 6 hours in a box furnace with a 99 vol% O₂ atmosphere, cooled, and sieved through 325 mesh to obtain a high entropy doped positive electrode material.

### Example 3

In this example, the boron source was H₃BO₃, the doping source was ZrO₂, SrCO₃, Ta₂O₅, Nb₂O₅ and CaO, the lithium source was LiOH•H₂O, the nickel-cobalt-manganese precursor was Ni_{0.96}Co_{0.03}Mn_{0.01}(OH)₂, and the Dv50 of the nickel-cobalt-manganese precursor was 2µm to 3µm. The Dv50 of the prepared high-entropy doped positive electrode material was 2µm to 3µm, and the specific surface area was 1.023m²/g.

Production method of high entropy doped positive electrode material:
(1) Ni_{0.93}Co_{0.05}Mn_{0.02}(OH)₂, LiOH•H₂O, H₃BO₃, ZrO₂, SrCO₃, Ta₂O₅, Nb₂O₅ and CaO were weighed in a molar ratio of 1:1.04:0.04:0.01:0.01:0.005:0.005:0.01, and the above compounds were mixed in an air flow mixer. The speed of the air flow mixer was 1200 rpm/min, and the mixing was performed for 40 min. After sufficient mixing, a mixed raw material was obtained.
(2) The mixed raw material was transferred to an atmosphere furnace for high-temperature sintering in a sintering atmosphere. First, the mixed raw material was heated to 630°C at a heating rate of 2.5°C/min and sintered for 6 hours, and then the mixed raw material was heated to 720°C at a heating rate of 2.5°C/min and sintered for 16 hours. The oxygen content in the sintering atmosphere was 99 vol%. After cooling in the furnace, the obtained material was successively subjected to jaw crushing, roller crushing, air flow crushing and sieving through 325 mesh to obtain a sintered material.
(3) The sintered material obtained in step (2) and cobalt hydroxide were mixed uniformly at a molar ratio of 1:0.01, heat-treated at 660°C for 6 hours in a box furnace with a 99 vol% O₂ atmosphere, cooled, and sieved through 325 mesh to obtain a high entropy doped positive electrode material.

### Comparative Example 1

In this comparative example, the high nickel positive electrode material was not doped, the lithium source was LiOH•H₂O, the nickel cobalt manganese precursor was Ni_{0.96}Co_{0.03}Mn_{0.01}(OH)₂, and the Dv50 of the nickel cobalt manganese precursor was 2µm to 3µm. The Dv50 of the prepared positive electrode material was 2µm to 3µm, and the specific surface area was 0.997m²/g.

Production method of high nickel positive electrode material:
(1) Ni_{0.96}Co_{0.03}Mn_{0.01}(OH)₂ and LiOH•H₂O are weighed in a molar ratio of 1:1.04, and the above two compounds were mixed in an air flow mixer. The speed of the air flow mixer was 1200rpm/min, and the mixing was performed for 40min. After sufficient mixing, a mixed raw material was obtained.
(2) The mixed raw material was transferred to an atmosphere furnace for high-temperature sintering in a sintering atmosphere. First, the mixed raw material was heated to 630°C at a heating rate of 2.5°C/min and sintered for 6 hours, and then the mixed raw material was heated to 720°C at a heating rate of 2.5°C/min and sintered for 16 hours. The oxygen content in the sintering atmosphere was 99 vol%. After cooling in the furnace, the obtained material was successively subjected to roller crushing, air flow crushing, ultracentrifugal grinding and crushing, and sieving through 325 mesh to obtain a sintered material.
(3) The sintered material obtained in step (2) and cobalt hydroxide were mixed uniformly at a molar ratio of 1:0.01, sintered at 660°C for 6 hours in a box furnace with a 99 vol% O₂ atmosphere, cooled, and sieved through 325 mesh to obtain a high-nickel positive electrode material.

### Comparative Example 2

In this comparative example, the positive electrode material did not comprise B element, the doping source was ZrO₂, SrCO₃ and Al₂O₃, the lithium source was LiOH•H₂O, the nickel-cobalt-manganese precursor was Ni_{0.96}Co_{0.03}Mn_{0.01}(OH)₂, and the Dv50 of the nickel-cobalt-manganese precursor was 2µm to 3µm. The Dv50 of the prepared positive electrode material was 2µm to 3µm, and the specific surface area was 0.9866m²/g.

Production method of doped positive electrode material:
(1) Ni_{0.96}Co_{0.03}Mn_{0.01}(OH)₂, LiOH•H₂O, ZrO₂, SrCO₃ and Al₂O₃ were weighed in a molar ratio of 1:1.04:0.01:0.01:0.005, and the above compounds were mixed in an air flow mixer. The speed of the air flow mixer was 1200rpm/min, and the mixing was performed for 40min. After sufficient mixing, a mixed raw material was obtained.
(2) The mixed raw material was transferred to an atmosphere furnace for high-temperature sintering treatment in a sintering atmosphere. First, the mixed raw material was heated to 630°C at a heating rate of 2.5°C /min and sintered for 6h, and then the mixed raw material was heated to 720°C at a heating rate of 2.5°C /min and sintered for 16h. The oxygen content in the sintering atmosphere was 99vol%. After cooling in the furnace, the obtained material was subjected to roller crushing, ultracentrifugal grinding and crushing, and sieving through 325 mesh in turn to obtain a sintered material.
(3) The sintered material obtained in step (2) and cobalt hydroxide were uniformly mixed in a molar ratio of 1:0.01, sintered at 660°C for 6 h in a box furnace with a 99 vol% O₂ atmosphere, cooled, and sieved through 325 mesh to obtain a doped positive electrode material.

### Comparative Example 3

In this comparative example, the positive electrode material was only doped by B, the boron source was H₃BO₃, the lithium source was LiOH•H₂O, and the nickel-cobalt-manganese precursor was Ni_{0.96}Co_{0.03}Mn_{0.01}(OH)₂. The Dv50 of the prepared positive electrode material was 2µm to 3µm, and the specific surface area was 0.974m²/g.

Production method of doped positive electrode material:
(1) Ni_{0.96}Co_{0.03}Mn_{0.01}(OH)₂, LiOH•H₂O and H₃BO₃ were weighed in a molar ratio of 1:1.04:0.01, and the above three compounds were mixed in an air flow mixer. The speed of the air flow mixer was 1200rpm/min, and the mixing was performed for 40min. After sufficient mixing, a mixed raw material was obtained.
(2) The mixed raw material was transferred to an atmosphere furnace for high-temperature sintering treatment in a sintering atmosphere. First, the mixed raw material was heated to 630°C at a heating rate of 2.5°C/min and sintered for 6 hours, and then the mixed raw material was heated to 720°C at a heating rate of 2.5°C/min and sintered for 16 hours. The oxygen content in the sintering atmosphere was 99vol%. After cooling in the furnace, the obtained material was subjected to roller crushing, ultracentrifugal grinding and crushing, and sieving through 325 mesh in sequence to obtain a sintered material.
(3) The sintered material obtained in step (2) and cobalt hydroxide were mixed uniformly at a molar ratio of 1:0.01, sintered at 660°C for 6 hours in a box furnace with a 99vol% O₂ atmosphere, cooled, and sieved through 325 mesh to obtain a doped positive electrode material.

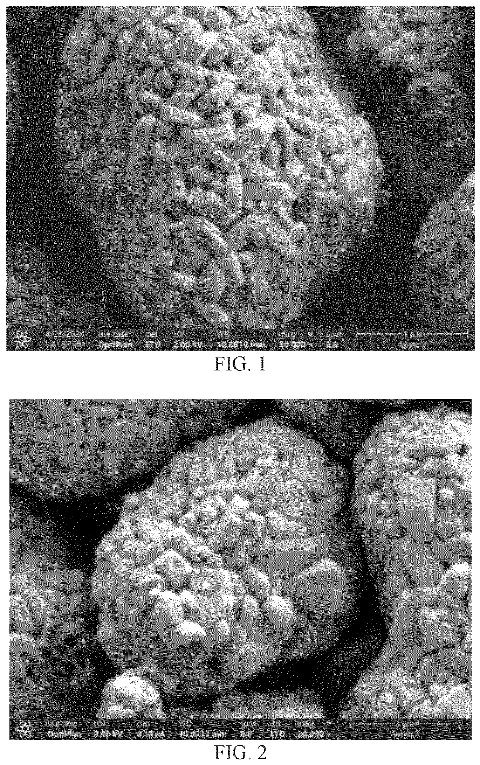

The high entropy doped positive electrode material prepared in Example 1 and the positive electrode material prepared in Comparative Example 1 were characterized by scanning electron microscopy, and the SEM photos at a magnification of 30k are shown in FIGs. 1 and 2, respectively. As can be seen from FIGs. 1 and 2, the samples prepared in Example 1 and Comparative Example 1 are polycrystalline samples with small primary particles, and the Dv50 of the secondary particles is 2µm to 3µm. After the positive electrode material in Example 1 was modified by high entropy doping, its primary particles are in the shape of thin strips, and the uniformity of the primary particle size is good. In Comparative Example 1, the primary particles are in the shape of polyhedrons, and the uniformity of the primary particle size is significantly poor.

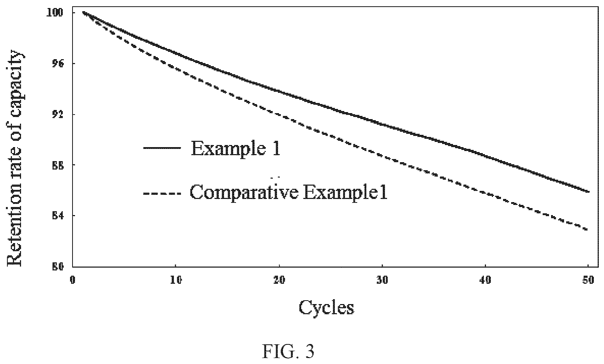

Positive electrode sheets were produced using the positive electrode materials prepared in each example and comparative example as positive electrode active materials for lithium ion secondary batteries, and button-type lithium ion half-cells were assembled. The method for producing a button-type lithium-ion half-cell is as follows. The prepared positive electrode material powder was mixed with acetylene black and polyvinylidene fluoride in a mass ratio of 90:5:5, an appropriate amount of N-methylpyrrolidone was added as a dispersant, and the mixture was ground into a slurry. The slurry was then evenly coated on a single-side surface of an aluminum foil, vacuum dried at 120°C for 12 hours. The dried electrode was rolled with a roller machine, and the aluminum foil was cut with a slicer to form a circular electrode with a diameter of 10 mm and a compaction density of about 3.4 g/cm³. The half-cell was assembled in an argon atmosphere glove box, with a water partial pressure of ≤0.1 ppm and an oxygen partial pressure of ≤0.1 ppm; a metal lithium sheet was used as the negative electrode, and a 1M LiPF₆ (EC/DMC at a volume ratio of 1:1) solution was used as the electrolyte, and a button-type battery with a specification of CR2032 was assembled. Among them, the capacity test adopted constant current and constant voltage charge and discharge mode, the charge and discharge rates were first 0.1C and then 1/3C, and the charge and discharge cycle was tested at 45°C and 0.5C. The charge and discharge voltage ranges were set to 2.5 to 4.3V for the capacity and cycle test. The test results are shown in Table 1 and FIG. 3.

**Table 1**

| | Specific discharge capacity at 0.1C (mAh/g) | Initial Coulomb efficiency (%) | Specific discharge capacity at 0.33C (mAh/g) | Retention rate after 50 cycles (%) |
|---|---|---|---|---|
| Example 1 | 243.8 | 95.95 | 232.3 | 85.87 |
| Example 2 | 241.4 | 95.46 | 231.8 | 85.09 |
| Example 3 | 240.8 | 94.85 | 230.6 | 85.24 |
| Comparative Example 1 | 235.0 | 95.10 | 228.2 | 82.84 |
| Comparative Example 2 | 239.8 | 94.85 | 229.4 | 82.91 |
| Comparative Example 3 | 237.0 | 94.14 | 228.6 | 82.12 |

The high entropy doped positive electrode material in the examples of the present application can have both high specific capacity and cycle stability.

The technical features of the above-mentioned examples can be combined arbitrarily. In order to make the description concise, not all possible combinations of each technical feature in the above-mentioned examples are described. However, as long as there is no contradiction in the combination of these technical features, they should be considered to be within the scope of the present application.

The above-mentioned examples only express several embodiments of the present application, and the description is relatively specific and detailed, but it cannot be understood as a limitation on the scope of the present invention. It should be pointed out that for those of ordinary skill in the art, several variations and modifications can be made without departing from the concept of the present application, which all belong to the protection scope of the present application. Therefore, the protection scope of the patent of this application shall be based on the attached claims, and the description and drawings can be used to interpret the content of the claims.

## Claims

1. A high entropy doped positive electrode material, comprising a material represented by a chemical formula of LiNiₓCo_{y}Mn_{z}BₐM_{b}O₂, wherein 0.80≤x<0.98, 0<y<0.2, 0<z<0.2, a>0, b>0, a≥b, x+y+z+a+b=1, and M comprises at least four of Al, Zr, Sr, Sn, Sb, Si, Ba, Y, W, Ta, Ti, Mo, Nb, La, Ta and Ce.

2. The high entropy doped positive electrode material according to claim 1, wherein 0.90≤x<0.98; and/or, 0.01≤a≤0.05; and/or, 0.01≤b≤0.05; and/or, 0.01≤y≤0.05; and/or, 0.01≤z≤0.05.

3. The high entropy doped positive electrode material according to claim 1 or 2, wherein a secondary particle of the high entropy doped positive electrode material has a Dv50 of 2µm to 5µm; and/or
a specific surface area of the high entropy doped positive electrode material is 0.5m²/g to 1.5m²/g.

4. A method for producing a high entropy doped positive electrode material, comprising the steps of:
mixing a doping source, a boron source, a lithium source, and a nickel-cobalt-manganese precursor to obtain a mixed raw material; and
sintering the mixed raw material;
wherein the doping source comprises at least four of Al, Zr, Sr, Sn, Sb, Si, Ba, Y, W, Ta, Ti, Mo, Nb, La, Ta and Ce;
the nickel-cobalt-manganese precursor comprises a material represented by a chemical formula of NiₘCoₙMn₁₋ₘ₋ₙ(OH)₂, wherein 0.80≤m<0.98, n>0, m+n<1.

5. The method for producing a high entropy doped positive electrode material according to claim 4, wherein a molar ratio of a lithium element in the lithium source to the nickel-cobalt-manganese precursor is (1.01-1.06) :1; and/or,
a molar percentage of a boron element in the boron source to the mixed raw material is 1%-5%; and/or,
a molar percentage of an M element in the doping source to the mixed raw material is 0.5%-5%; and/or,
the boron source comprises at least one of H₃BO₃ and B₂O₃; and/or,
the doping source comprises at least one of oxide, carbonate, hydroxide and acetate of M; and/or,
the lithium source comprises at least one of lithium hydroxide, lithium carbonate, lithium acetate, lithium nitrate and lithium oxalate.

6. The method for producing a high entropy doped positive electrode material according to claim 4 or 5, wherein the sintering the mixed raw material comprises the steps of:
pre-sintering the mixed raw material in an oxygen-containing gas atmosphere;
after heating, subjecting the mixed raw material to a first sintering to obtain a sintered material; and
in an oxygen-containing gas atmosphere, mixing the sintered material and cobalt hydroxide to obtain a mixture, and subjecting the mixture to a second sintering.

7. The method for producing a high entropy doped positive electrode material according to claim 6, wherein the pre-sintering is performed at a temperature of 450°C to 650°C; and/or,
the pre-sintering is performed for 2h to 10h; and/or,
the first sintering is performed at a temperature of 700°C to 900°C; and/or,
the first sintering is performed for 10h to 20h; and/or,
the second sintering is performed at a temperature of 580°C to 680°C; and/or,
the second sintering is performed for 2h to 10h; and/or,
a volume percentage of oxygen in the oxygen-containing gas is above 97%.

8. A positive electrode sheet, comprising: a current collector and an active layer located on the surface of the current collector, wherein the active layer comprises the high entropy doped positive electrode material according to any one of claims 1 to 3, or a high entropy doped positive electrode material produced by the method for producing a high entropy doped positive electrode material according to any one of claims 4 to 7.

9. A secondary battery, comprising the positive electrode sheet according to claim 8.

10. An electrical device, comprising the secondary battery according to claim 9.
